# EUROPÄISCHE PATENTSCHRIFT

(11) **EP 0 682 609 B1**
(45) Veröffentlichungstag und Bekanntmachung des Hinweises auf die Patenterteilung: **08.01.1997**
(21) Anmeldenummer: 94907487.6
(22) Anmeldetag: 11.02.1994
(51) Int. Cl.: B60R 25/04

(54) **FAHRZEUGSICHERUNGSEINRICHTUNG**
SAFETY DEVICE FOR VEHICLES
DISPOSITIF DE SECURITE POUR VEHICULES

(30) Priorität: 12.02.1993 AU PL7277/93
(43) Veröffentlichungstag der Anmeldung: 22.11.1995
(73) Patentinhaber: ROBERT BOSCH GMBH, 70442 Stuttgart (DE)
(72) Erfinder: LINTON, Rodney, Phillip, Wantirna South, VIC 3152 (AU); EGLINSCH-VEGLINSCH, Janis, Ivanhoe, VIC 3079 (AU); MATUSCHEK, Wolfgang, Patterson Lakes, VIC 3197 (AU)
(86) Internationale Anmeldenummer: DE9400144
(87) Internationale Veröffentlichungsnummer: WO9418037

(56) Entgegenhaltungen:
- EP-A- 0 006 010
- WO-A-88/03884
- GB-A- 2 261 026
- GB-A- 2 264 536
- US-A- 5 172 094
- PATENT ABSTRACTS OF JAPAN vol. 17, no. 159 (M-1389) 29. März 1993 & JP,A,04 325 775 (MITSUBISHI ELECTRIC) 16. November 1992

## Beschreibung

Die Erfindung geht aus von einer Einrichtung nach der Gattung der unabhängigen Ansprüche 1 und 5.

Eine bekannte gattungsgemäße Einrichtung (EP-B 6 010) umfaßt einen Computer zur Steuerung verschiedener wesentlicher Motorfunktionen der mit einem Schlüsselsensor verbunden ist. Eine Inbetriebnahme des Computers und damit des Fahrzeuges ist nur möglich, wenn die elektrische Steuervorrichtung in erlaubter Weise, d. h. insbesondere mit einem autorisierten Schlüssel betätigt wurde. Zu den vom Computer für die Steuerung des Motorbetriebes verwendeten Signalen zählt auch ein Drehzahlsignal, welches ihm von einem Drehzahlsensor zugeführt wird.

Es ist weiterhin bekannt (EP-A 354 102) zur Sicherung eines Fahrzeugs gegen unbefugte Nutzung eine Sicherungseinrichtung einzusetzen, die eine Inbetriebnahme des Fahrzeuges nur zuläßt, wenn ein mittels eines Signalgenerators erzeugtes Codesignal mit einem im Fahrzeug vorhandenen Referenzcodesignal übereinstimmt. Die Betätigung der Sicherheitseinrichtung erfolgt mit Hilfe einer Fernsteuerung, die codierte Infrarotsignale abgibt. Die Einrichtung wirkt auf betriebswesentliche Fahrzeugbestandteile, wie z. B. den Anlasser, die Benzinpumpe, das Einspritzsystem oder das zentrale Motorsteuergerät.

Eine Inbetriebnahme eines mit diesen bekannten Maßnahmen gesicherten Fahrzeuges ist selbst dann nicht möglich, wenn ein unberechtigter Benutzer in den Fahrzeuginnenraum gelangen konnte und die Zündung kurzgeschlossen hat. Zur Überwindung einer solchen Sicherheitseinrichtung muß das zur Freischaltung des Motorsteuergerätes benötigte Codesignal nachgebildet werden, wofür ein erheblicher technischer und methodischer Aufwand erforderlich ist.

Es ist üblich (EP-B 6 010, EP-A 354 102) Fahrzeuge mit einem, nachfolgend als Motormanagement bezeichneten Gerät zur Steuerung des Motorbetriebes auszurüsten, dem von einem am Motor angeordneten Drehzahlsensor Drehzahlsignale zugeführt sind. Der Drehzahlsensor kann beispielsweise am Motor angeordnet sein. Die Drehzahlinformation wird zum Einstellen geeigneter Motorparameter für den Startvorgang sowie für die unterschiedlichen Betriebszustände genutzt, um eine möglichst gute Effizienz zu erreichen.

Es ist Aufgabe der Erfindung, eine Fahrzeugsicherungseinrichtung anzugeben, welche einen Austausch von Signalen zwischen dem Drehzahlsensor und dem Motormanagementsystem nur gestattet, wenn die Sicherheitseinrichtung in einer vorgegebenen Weise durch eine autorisierte Person deaktiviert wurde.

Diese Aufgabe wird gelöst durch eine Einrichtung mit den kennzeichnenden Merkmalen eines der unabhängigen Ansprüche 1 und 5.

Gemäß der im unabhängigen Anspruch 1 vorgeschlagenen Ausführungsform ist in den Signalpfad zwischen dem Drehzahlsensor und dem Motormanagementsystem ein Schutzgerät geschaltet, das einen regulären Datenaustausch zwischen dem Drehzahlsensor und dem Motormanagementsystem nur gestattet, wenn es in ordnungsgemäßer Weise deaktiviert wurde. Im Normalfall wird das Motormanagementsystem beim Anlassen des Fahrzeuges durch die ersten vom Drehzahlsensor kommenden Signale initiert. Es setzt daraufhin geeignete Motorparameter, um das Anlaufen des Motors zu unterstützen. Erfolgte die Entriegelung der Sicherungseinrichtung nicht in vorgeschriebener Weise, bewirkt das Schutzgerät, daß die vom Drehzahlsensor abgegebenen Signale nicht an das Motormanagementsystem weitergeleitet werden. Ein Anlaufen des Motors ist infolgedessen nicht möglich. Damit ist in vorteilhafter Weise gewährleistet, daß ein unberechtigter Benutzer den Motor selbst dann nicht starten kann, wenn er den Anlasser durch Kurzschließen der Zündung betätigt. In vorteilhafter Ausgestaltung verändert das Schutzgerät das vom Drehzahlsensor erhaltene Signal bei der Weiterleitung an das Motormanagementsystem. Dadurch ist ein unberechtigtes Starten des Motors selbst dann nicht möglich, wenn ein unrechtmäßiger Benutzer sowohl die Zündung kurzschließt als auch zusätzlich das Schutzgerät überbrückt. Zur Umgehung einer erfindungsgemäßen Sicherungseinrichtung ist deshalb ein erheblicher technischer und methodischer Aufwand erforderlich. Sie bildet damit einen guten Schutz gegen unberechtigte Benutzung des gesicherten Fahrzeuges. Die vorgeschlagene Sicherungseinrichtung eignet sich zur Anwendung in Verbindung mit nahezu jedem beliebigen Inbetriebnahmesystem, beispielsweise mit einem mechanischen Schlüssel oder einer berührungslos arbeitenden Fernsteuerung.

Gemäß der im unabhängigen Anspruch 5 angegebenen Ausführungsform ist das Schutzgerät dem Drehzahlsensor vorgeschaltet und wirkt direkt auf die Ausgabe der Drehzahlsignale durch den Drehzahlsensor. Es gestattet die Übermittlung von Drehzahlsignalen an das Motormanagementsystem nur, wenn es in ordnungsgemäßer Weise deaktiviert wurde. Die zweite Ausführungsform bietet dieselben Vorteile wie die erste, insbesondere läßt sie eine Umgehung der Sicherungseinrichtung selbst dann nicht zu, wenn ein unrechtmäßiger Benutzer sowohl die Zündung kurzschließt, als auch das Schutzgerät überbrückt. In diesem Falle würde die Übermittlung des zum Betrieb des Drehzahlsensors notwendigen vorgegebenen Signales unterbleiben. Der Drehzahlsensor wurde dem Motormanagementsystem dann keine Drehzahlsignale liefern.

Ausführungsbeispiele der Sicherungseinrichtung werden nachfolgend anhand der Zeichnung näher erläutert.

### Zeichnung

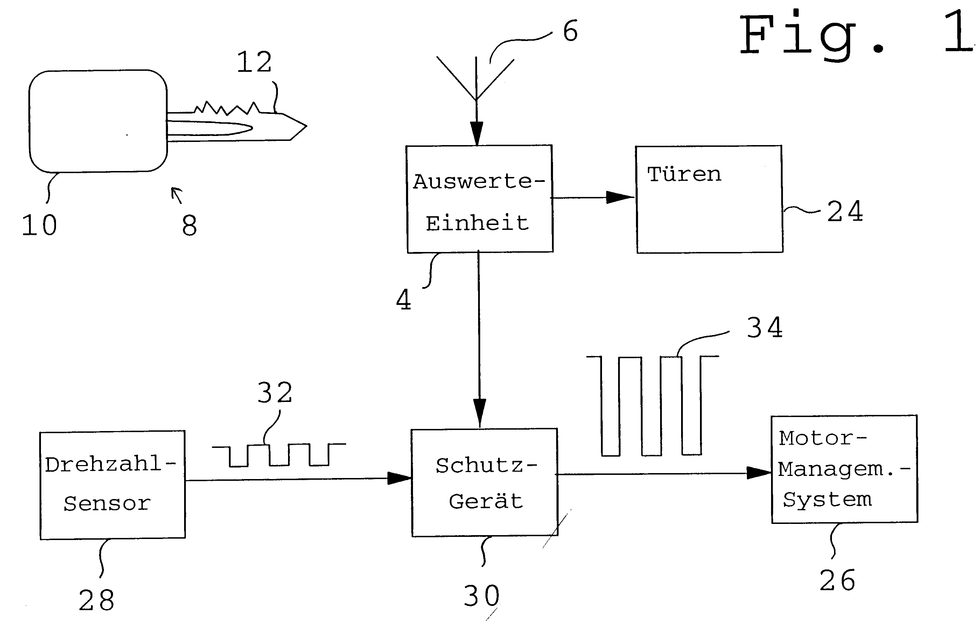

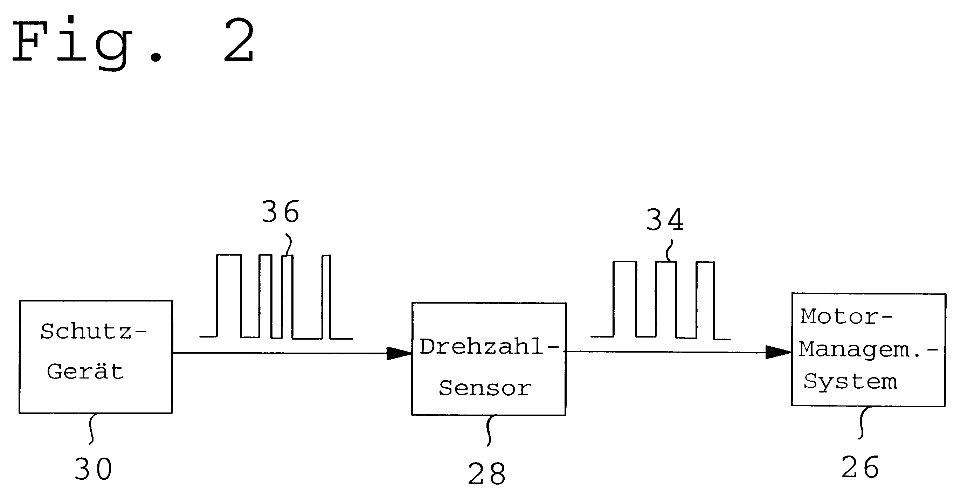

Es zeigen Figur 1 ein Blockschaubild der vorgeschlagenen Sicherungseinrichtung, Figur 2 eine zweite Ausführungsform.

Figur 1 zeigt die wesentlichen Bestandteile einer vorgeschlagenen Sicherungseinrichtung. Ihre Aktivierung beziehungsweise Deaktivierung erfolgt mittels eines Fernbedienungsschlüssels 8. Er setzt sich aus einem Griffgehäuse 10 und einem daraus hervortretenden Schlüsselblatt 12 zusammen. Letzteres kann allerdings auch fehlen oder beispielsweise in einem separaten Schlüssel realisiert sein. Im Griffgehäuse 10 sind eine Signalerzeugungseinrichtung zur Erzeugung von Signalen zur Aktivierung und zur Deaktivierung der Sicherungseinrichtung sowie eine Antenne zur Abstrahlung der Entriegelungssignale angeordnet. In dem zu sichernden Fahrzeug befindet sich eine Auswerteeinheit 4, der zum Empfang der von dem Fernbedienungsschlüssel 8 emmitierten Signale eine Antenne 6 zugeordnet ist. Ausgangsseitig ist sie mit den Türschließeinrichtungen 24 sowie mit einem Schutzgerät 30 verbunden. Weiterhin kann sie auch mit anderen für die Funktion des Fahrzeug elementaren Einrichtungen verbunden sein, wie zum Beispiel dem Anlasser, der Benzinpumpe und/oder der Einspritzanlage. Mit dem Schutzgerät 30 verbunden sind eingangsseitig ein Drehzahlsensor 28 sowie ausgangsseitig ein Motormanagementsystem 26.

Bei üblichen Motorsteuerungssystemen sind die vom Drehzahlsensor 28 gelieferten Signale direkt dem Motormanagementsystem 26 zugeführt, welches daneben noch Signale von verschiedenen anderen, nicht dargestellten Quellen erhält. Aufgrund aller dem Motormanagementsystem zugeführten Signale ermittelt dieses zumindest einen Teil der für einen optimierten Motorbetrieb einzustellenden Motorparameter, wie zum Beispiel den Zündzeitpunkt oder das Kraftstoffmischungsverhältnis. Beim Startvorgang wertet das Motormanagementsystem 26 insbesondere die vom Drehzahlsensor 28 gelieferten Signale aus. Es geht in Betrieb, sobald es vom Drehzahlsensor 28 Signale erhält, welche den Beginn des Anlaßvorgangs durch den Anlasser anzeigen. Dabei stellt es dann die Motorparameter zunächst so ein, daß ein sicherer Motorstart erreicht wird.

Erfindungsgemäß ist zwischen Drehzahlsensor 28 und Motormanagementsystem 26 das Schutzgerät 30 geschaltet. Es arbeitet derart, daß es nur dann Signale vom Drehzahlsensor 28 an das Motormanagementsystem 26 weiterleitet, wenn die Auswerteeinheit 4 in vorgeschriebener Weise durch ein autorisiertes Signal von dem Fernbedienungsschlüssel 8 aktiviert wurde, und das Schutzgerät 30 daraufhin freigegeben hat.

Für das in Figur 1 angedeutete Ausführungsbeispiel ist angenommen, daß der Drehzahlsensor 28, sobald der Anlasser in Betrieb genommen wurde, ein binäres Rechteckwellensignal 32 mit einer Amplitude von beispielsweise 0,5 Volt abgibt. Das Signal 32 ist dem Schutzgerät 30 zugeführt. Dieses erzeugt zu dem Signal 32 ein binäres Folgesignal 34, das gleichfalls Rechteckwellenform aufweist, dessen Amplitude sich jedoch von der des Signals 32 deutlich unterscheidet und beispielsweise 5 Volt beträgt. Das Folgesignal 34 ist dem Motormanagementsystem 26 zugeführt. Der Eingang des Motormanagementsystems 26, an dem das Folgesignal 34 anliegt, weist eine Spannungsschwellwertstufe auf. Sie ist nur für Signale pasierbar, deren Amplitude über einem Schwellenwert liegt, den Folgesignale 34 bei korrekter Entriegelung aufweisen. Beträgt letztere beispielsweise im Normalfall 5 Volt, würde das Motormanagementsystem 26 auf Signale mit einer Amplitude von 0,5 Volt nicht reagieren. Durch einfaches Kurzschließen des Schutzgeräts 30, in dem das vom Drehzahlsensor 28 gelieferte Signal direkt dem Motormanagementsystem 26 zugeführt wird, kann dieses deshalb nicht in Betrieb gesetzt werden.

Gemäß weiteren zweckmäßigen Ausführungen der Sicherungseinrichtung erzeugt der Drehzahlsensor 28 ein Rechteckwellensignal 32 mit einer vorgegebenen Frequenz oder alternativ mit einer binären Codierung. Das Schutzgerät 30 ist so ausgelegt, daß es daraus im ersten Fall ein Folgesignal 34 mit einer anderen Frequenz oder im zweiten Fall mit einer geänderten Codierung erzeugt und an das Managementsystem 26 weiterleitet.

Figur 2 zeigt eine weitere Ausführungsform der erfindungsgemäßen Sicherungseinrichtung. Sie stimmt bezüglich der verwendeten Elemente mit der in Figur 1 dargestellten überein. Jedoch erzeugt das Schutzgerät 30 in diesem Fall selbst ein codiertes Rechteckwellensignal 36, welches dem Drehzahlsensor 28 zugeführt ist. Dieser erwartet das vom Schutzgerät 30 gelieferte Signal. Erst nach Erhalt des Signals 36 erzeugt der Drehzahlsensor 28 ein vom Motormanagementsystem akzeptiertes Folgesignal 34. Da auch die in Figur 2 dargestellte Anordnung insbesondere nicht dadurch umgehbar ist, daß der Drehzahlsensor einfach mit Spannung versorgt wird, bietet sie ebenfalls eine hohe Sicherheit gegen Umgehung der Sicherungsanordnung.

## Patentansprüche

1. Sicherungseinrichtung für ein mit einem Motormanagementsystem und einem Drehzahlsensor ausgerüstetes Fahrzeug, dadurch gekennzeichnet, daß zwischen dem Motormanagementsystem (26) und dem Drehzahlsensor (28) ein Schutzgerät (30) angeordnet ist, dem die beim Anlassen vom Drehzahlsensor (28) erzeugten Signale (32) zugeführt sind und das aus diesen von den Signalen (32) verschiedene Folgesignale (34) erzeugt, welche dem Motormanagementsystem (26) zugeführt sind, wobei das Schutzgerät (30) nur dann Signale (34) vom Drehzahlsensor (28) an das Motormanagementsystem (26) übermittelt, wenn es mittels einer Entriegelungseinrichtung (8) in vorgeschriebener Weise entriegelt wurde.

2. Sicherungseinrichtung nach Anspruch 1, dadurch gekennzeichnet, daß das Folgesignal (34) eine andere Amplitude aufweist als das vom Drehzahlsensor (28) abgegebene Signale (32).

3. Sicherungseinrichtung nach Anspruch 1, dadurch gekennzeichnet, daß das Folgesignal (34) eine andere Frequenz aufweist als das vom Drehzahlsensor (28) abgegebene Signal.

4. Sicherungseinrichtung nach Anspruch 1, dadurch gekennzeichnet, daß das Folgesignal (34) eine andere Codierung aufweist als das vom Drehzahlsensor (28) abgegebene Signal.

5. Sicherungseinrichtung für ein mit einem Motormanagementsystem und einem Drehzahlsensor ausgerüstetes Fahrzeug, dadurch gekennzeichnet, daß dem Drehzahlsensor (28) ein Schutzgerät (30) vorgeschaltet ist, welches dem Drehzahlsensor (28) beim Anlassen des Motors ein vorgegebenes Signal (36) übermittelt, aufgrund dessen der Drehzahlsensor (28) Signale an das Motormanagementsystem (26) übermittelt, wobei das Schutzgerät (30) das vorgegebene Signal (36) nur ausgibt, wenn es mittels einer Inbetriebnahmeeinrichtung (8) in vorgeschriebener Weise entriegelt wurde.

## Claims

1. Security device for a vehicle which is equipped with an engine management system and a rotational speed sensor, characterized in that a protection device (30) is arranged between the engine management system (26) and the rotational speed sensor (28), to which protection device (30) the signals (32) generated when the rotational speed sensor (28) starts are fed and which generates from the said signals (32) sequence signals (34) which are different from the signals (32) and which are fed to the engine management system (26), the protection device (30) only transferring signals (34) from the rotational sensor (28) to the engine management system (26) if it has been unlocked by means of an unlocking device (8) in a prescribed manner.

2. Security device according to Claim 1, characterized in that the sequence signal (34) has a different amplitude from the signal (32) output by the rotational speed sensor (28).

3. Security device according to Claim 1, characterized in that the sequence signal (34) has a different frequency from the signal output by the rotational speed sensor (28).

4. Security device according to Claim 1, characterized in that the sequence signal (34) has a different coding from the signal output by the rotational speed sensor (28).

5. Security device for a vehicle which is equipped with an engine management system and a rotational speed sensor, characterized in that a protection device (30) which transfers a prescribed signal (36) to the rotational speed sensor (28) when the engine is started is connected upstream of the rotational speed sensor (28), on the basis of which signal the rotational speed sensor (28) transfers signals to the engine management system (26), the protection device (30) only outputting the prescribed signal (36) if it has been unlocked by means of an activation device (8) in a prescribed manner.

## Revendications

1. Installation de sécurité pour un véhicule équipé d'un système de gestion de moteur et d'un capteur de vitesse de rotation,
caractérisée par
un appareil de protection (30) monté entre le système de gestion de moteur (26) et le capteur de vitesse de rotation (28) et qui reçoit, au démarrage, les signaux (32) générés par le capteur de vitesse de rotation (28) pour en déduire des signaux récurants (34) différents des signaux (32), ces signaux (34) étant fournis au système de gestion de moteur (26), l'appareil de protection (30) ne transmettant les signaux (34) du capteur de vitesse de rotation (28) au système de gestion (26) que si l'appareil a été déverrouillé de manière prescrite par une installation de déverrouillage (8).

2. Installation de sécurité selon la revendication 1,
caractérisée en ce que
le signal récurant (34) a une amplitude différente de celle du signal (32) émis par le capteur de vitesse de rotation (28).

3. Installation de sécurité selon la revendication 1,
caractérisée en ce que
le signal récurant (34) a une autre fréquence que le signal émis par le capteur de vitesse de rotation (28).

4. Installation de sécurité selon la revendication 1,
caractérisée en ce que
le signal récurant (34) a un codage différent de celui du signal fourni par le capteur de vitesse de rotation (28).

5. Installation de sécurité pour un véhicule équipé d'un système de gestion de moteur et d'un capteur de vitesse de rotation,
caractérisée en ce que
le capteur de vitesse de rotation (28) est précédé d'un appareil de protection (30) qui transmet un signal prédéterminé (36) au capteur de vitesse de rotation (28) lors du démarrage du moteur, et, à partir de ce signal, le capteur de vitesse de rotation (28) transmet des signaux au système de gestion de moteur (26), l'appareil de protection (30) n'émettant le signal prédéterminé (36) que s'il a été déverrouillé de manière prescrite par une installation de mise en route (8).
